# EUROPÄISCHE PATENTSCHRIFT

(11) **EP 3 288 787 B1**
(45) Veröffentlichungstag und Bekanntmachung des Hinweises auf die Patenterteilung: **07.08.2019**
(21) Anmeldenummer: 16733078.6
(22) Anmeldetag: 29.06.2016
(51) Int. Cl.: B60G 11/02, B60G 7/04

(54) **ANSCHLAGVORRICHTUNG**
STOP MECHANISM
DISPOSITIF DE BUTÉE

(30) Priorität: 30.06.2015 DE 102015110546
(43) Veröffentlichungstag der Anmeldung: 07.03.2018
(73) Patentinhaber: Vibracoustic GmbH, 64293 Darmstadt (DE)
(72) Erfinder: ROSE, David, 22159 Hamburg (DE); WERNER, Philipp, 21339 Lüneburg (DE)
(74) Vertreter: Flügel Preissner Schober Seidel
(86) Internationale Anmeldenummer: PCT/EP2016/065118
(87) Internationale Veröffentlichungsnummer: WO 2017/001462

(56) Entgegenhaltungen:
- EP-A2- 1 155 884
- DE-B- 1 012 780
- JP-A- H0 516 626
- JP-A- H07 257 129
- JP-A- S61 282 107
- JP-A- 2000 255 240
- JP-A- 2009 083 705
- JP-U- H0 517 242
- US-A- 3 770 077
- US-A- 3 850 444
- US-B1- 6 371 466

## Beschreibung

Die vorliegende Erfindung betrifft eine Anschlagvorrichtung zur Begrenzung einen vertikalen Einfederung einer an einem Achskörper befestigten Blattfeder eines Kraftfahrzeugs.

Bei Kraftfahrzeugen, insbesondere Nutzfahrzeugen, die eine blattgefederte Achse aufweisen, besteht die Gefahr, dass beim Überfahren von Unebenheiten oder beim Bremsen die Achse stark einfedert. Dadurch kann es zu einer Überbeanspruchung der Blattfeder kommen. Diese Überbeanspruchung erfolgt durch ein undefiniertes, S-förmiges Ausschlagen der Blattfeder. Zur Vermeidung einer Überbeanspruchung der Blattfeder wird eine Anschlagvorrichtung der eingangs genannten Art verwendet. Hierzu ist es bekannt, die Anschlagvorrichtung an einem Fahrzeugträger des Kraftfahrzeugs zu befestigen.

So geht aus DE 35 15 130 C2 ein Gummianschlag hervor, der mittels eines Halteblechs an einem Fahrzeugträger eines Nutzfahrzeugs befestigt ist.

Ferner geht aus DE 36 20 883 C2 eine Anschlagvorrichtung hervor, die eine aus zwei massiven Stahlblechen gebildete Anschlaghalterung mit einer Aufnahmeöffnung aufweist, in die ein Gummianschlag eingesetzt ist. Die Anschlaghalterung ist dabei derart an einem Fahrzeugträger montiert, dass der Gummianschlag an dem Fahrzeugträger anliegt und in der Aufnahmeöffnung fixiert ist.

Ferner geht aus JP 52 70 226 A eine Anschlagvorrichtung mit einem Gummianschlag hervor, der an einem Träger aus Metall befestigt ist. Der Träger seinerseits ist an einem Fahrzeugträger angeschraubt.

Des Weiteren geht aus US 6,371,466 B1 eine Anschlagvorrichtung für ein Blattfederpaket eines Kraftfahrzeugs hervor, die ein mit einem Kraftfahrzeugrahmen verbindbares festes Stützelement, ein von dem festen Stützelement aufgenommenes verschiebbares Stützelement, eine mit dem verschiebbaren Stützelement verbundene Feder und ein mit der Feder verbundenes Anschlagkissen aufweist. Das Dokument US 6,371,466 B1 offenbart den Oberbegriff des Anspruchs 1.

Ferner geht aus JP H05-17242 U eine Anschlagvorrichtung für ein Blattfederpaket eines Kraftfahrzeugs hervor, die einen Gummianschlag aufweist, der sich über Stützträger an einem Fahrzeugträger und einem Fahrwerksrahmen abstützt.

JP H07-257129 A offenbart eine Anschlagvorrichtung für ein Blattfederpaket eines Kraftfahrzeugs, die einen Anschlag und einen mit dem Anschlag verbundenen Aktuator aufweist, wobei der Aktuator den Anschlag auf das Blattfederpaket während eines Bremsvorgangs zu bewegt.

Schließlich offenbart JP H05-16626 A einen Zwischenhaltemechanismus, der einen Aktuator aufweist, über den eine Stange mit einem endseitig angeordneten Anschlag in Richtung eines Arms aus einem faserverstärkten Kunststoff ausfahrbar ist, um eine Schwingbewegung des Arms zu begrenzen.

Die aus dem Stand der Technik bekannten Anschlagvorrichtungen weisen konstruktionsbedingt ein hohes Gewicht auf.

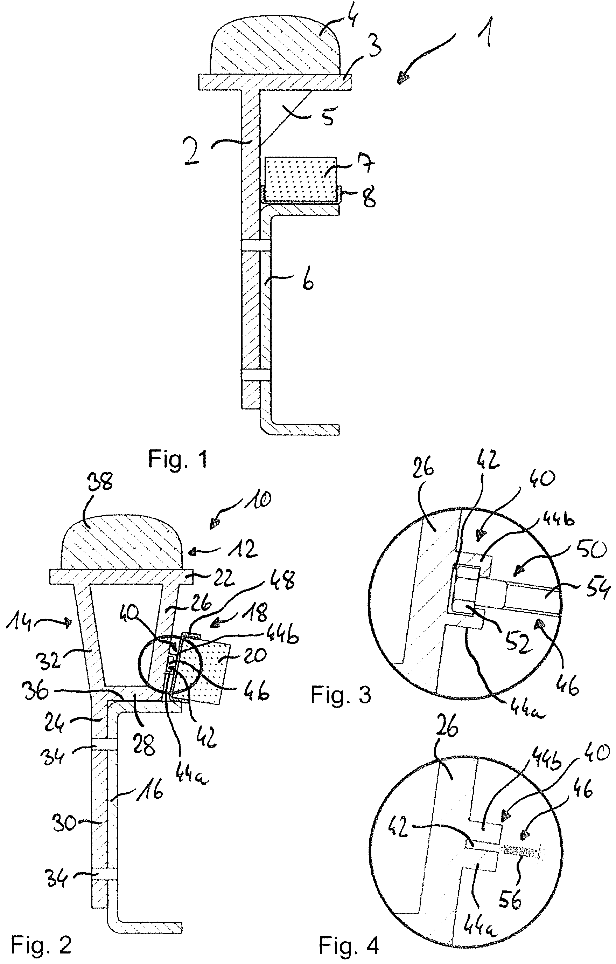

Ferner ist in Fig. 1 eine bekannte Anschlagvorrichtung 1 gezeigt, die aus einem massiven T-förmigen Stahlträger 2 besteht, der endseitig mit einer Tragplatte 3 versehen ist, auf der ein Gummipuffer 4 angeordnet ist. Die Tragplatte 3 stützt sich über Rippen 5 an dem Stahlträger 2 ab, um die auf den Gummipuffer 4 wirkenden Kräfte in den Stahlträger 2 einzuleiten. Der Stahlträger 2 ist über zwei nicht dargeStellte Schrauben an einem Fahrzeugträger 6 befestigt. Wie in Fig. 1 ersichtlich ist, steht der auf dem Fahrzeugträger 6 zur Verfügung stehende Bauraum Kabelleitungen 7 zur Verfügung. Die Kabelleitungen 7 werden in Halteblechen 8 vorkonfektioniert und mit Hilfe dieser Haltebleche 8 auf dem Fahrzeugträger 6 befestigt. Aufgrund der hohen auftretenden Biegemomente erfordert diese Anschlagvorrichtungen eine schwere Stahlkonstruktion zur Befestigung des Gummipuffers an einem Fahrzeuglängsträger. Bedingt dadurch weist diese bekannte Anschlagvorrichtung ein hohes Gewicht auf, so dass damit versehenes Kraftfahrzeug eine geringe Nutzlast und einen hohen C02-Ausstoß aufweist. Zudem ist der Stahlträger durch Schmieden hergestellt, das eine nachträgliche spanende Bearbeitung des Stahlträgers erforderlich macht. Diese Nachbearbeitung ist kostenintensiv. Daneben wird der Bauraum auf dem Fahrzeuglängsträger 6 uneingeschränkt für Kabelleitungen genützt.

Der vorliegenden Erfindung liegt die **Aufgabe** zugrunde, eine Anschlagvorrichtung der eingangs genannten Art zu schaffen, die durch Schaffung zusätzlichen Bauraums leichter und kostengünstiger ausgebildet ist.

Zur **Lösung** der Aufgabe wird eine Anschlagvorrichtung mit den Merkmalen des Anspruchs 1 vorgeschlagen.

Vorteilhafte Ausgestaltungen sind Gegenstand der abhängigen Ansprüche.

Im Rahmen der vorliegenden Erfindung kann die blattgefederte Achse wenigstens eine Blattfeder oder ein aus mehreren Blattfedern gebildetes Federpaket aufweisen.

Gemäß einem Aspekt der Erfindung wird eine Anschlagvorrichtung zur Begrenzung einer vertikalen Einfederung einer an einem Achskörper befestigten Blattfeder eines Kraftfahrzeugs vorgeschlagen. Die Anschlagvorrichtung umfasst einen Anschlag, der die vertikale Bewegung der blattgefederten Achse begrenzt, eine Tragstruktur zur Abstützung und Befestigung des Anschlags an einem Fahrzeugträger und eine Führungseinrichtung zur Aufnahme und Führung wenigstens eines Kabels, einer Leitung und/oder einer Halterung, wobei die Führungseinrichtung an der Tragstruktur befestigt ist, und wobei die Tragstruktur eine Tragplatte, auf der der Anschlag angeordnet ist, einen ersten Träger, einen zweiten Träger, und einen die beiden Träger miteinander verbindenden Querträger aufweist. Durch die Befestigung der Führungseinrichtung an der Tragstruktur wird der Bauraum für die Kabel, diverse Leitungen wie beispielsweise Luftleitungen, Bremsleitungen, Hydraulikleitungen und/oder deren Haltebleche verlegt, so dass zusätzlicher Bauraum geschaffen wird. Dieser zusätzliche Bauraum kann nunmehr dazu genutzt werden, um das auf die Tragstruktur wirkende Biegemoment abzufangen und den Anschlag momentenfrei auf dem Fahrzeuglängsträger abzustützen. Dadurch kann eine schwere Stahlkonstruktion durch eine leichtere und kostengünstigere Tragstruktur ersetzt werden. So kann die Tragstruktur als Aluminiumstrangpressprofil ausgebildet sein, das gegebenenfalls anschließend spanend nachbearbeitet wird. Ein Aluminiumstrangpressprofil mit anschließender spanender Nachbearbeitung ist im Vergleich zu einem geschmiedeten Stahlträger, der nachträglich spanend bearbeitet worden ist, kostengünstiger. Bedingt durch den Einsatz eines leichteren Werkstoffs für die Tragstruktur weist die Anschlagvorrichtung ein geringeres Gewicht auf, so dass hierdurch die Nutzlast des Kraftfahrzeugs erhöht und der CO2-Ausstoß verringert ist. Die FühRungseinrichtung kann aus einem Halteblech gebildet sein, das wenigstens ein Kabel und/oder eine Leitung beziehungsweise ein aus mehreren Kabeln und/oder Leitungen gebildetes Kabelpaket und/oder Leitungspaket aufnimmt. Ferner kann das Kabel und /oder die Leitung beziehungsweise das Kabelpaket und/oder das Leitungspaket mit einem Schutzmantel aus Blech oder Kunststoff ummantelt sein.

Vorteilhaft ist die Führungseinrichtung derart mit der Tragstruktur verbunden, dass diese seitlich an der Tragstruktur angeordnet ist.

In einer vorteilhaften Ausgestaltung ist die Tragstruktur derart ausgebildet, dass sich ein Abschnitt der Tragstruktur auf dem Fahrzeugträger abstützt. Dadurch kann die auf den Anschlag wirkende Kraft abgefangen werden, indem die Kraft gleichmäßig in den Fahrzeugträger über die Tragstruktur eingeleitet wird. Dadurch wird der Anschlag momentenfrei gestützt.

Vorteilhaft stützt sich der zweite Träger auf dem Fahrzeugträger ab. Weiterhin bevorzugt ist die Tragplatte auf den beiden Trägern angeordnet. Der Querträger kann auf dem Fahrzeugträger aufliegen. Die beiden Träger stützen den auf der Tragplatte angeordneten Anschlag momentenfrei an dem Fahrzeugträger ab. Insbesondere der in die Tragstruktur integrierte zweite Träger, der sich direkt auf dem Fahrzeugträger abstützt, fängt das auf den Anschlag und/oder den ersten Träger wirkende Biegemoment ab. Im Rahmen der

Erfindung kann der erste Träger auch als Ständerbalken bezeichnet werden. Bevorzugt sind die Tragplatte, die Träger und der Querträger stoffschlüssig und/oder materialeinheitlich miteinander verbunden.

In einer vorteilhaften Ausgestaltung weisen die beiden Träger in einem Abschnitt einen konischen Verlauf auf. Dadurch ist eine verbesserte Abstützung des An schlags sowie eine verbesserte Aufnahme der auf den Anschlag wirkenden Kraft möglich. Bevorzugt ist der konische Verlauf der beiden Träger derart ausgebildet, dass die konische Öffnung in Richtung der Tragplatte zunimmt.

In einer vorteilhaften Ausgestaltung weist die Tragstruktur eine BefestigungseinRichtung zur Befestigung, vorzugsweise zur lösbaren Befestigung, der Führungseinrichtung auf. Über die Befestigungseinrichtung erfolgt die Befestigung der Führungseinrichtung an der Tragstruktur. Vorteilhaft ist die Befestigungseinrichtung seitlich an der Tragstruktur, insbesondere seitlich an einem der Träger, angeordnet.

Die Befestigungseinrichtung kann als ein Einsteckschacht ausgebildet sein, in den ein mit der Führungseinrichtung verbundenes oder verbindbares Einsteckelement einsetzbar ist. Der in die Tragstruktur integrierte Einsteckschacht kann zwei Wangen aufweisen, die beispielsweise eine Nut und/oder ein Langloch bilden. Bevorzugt erstreckt sich der Einsteckschacht in Tiefenrichtung der Tragstruktur. Weiterhin bevorzugt erstreckt sich der Einsteckschacht in Tiefenrichtung über die gesamte Länge der Tragstruktur. In den Einsteckschacht kann ein von der Führungseinrichtung abragendes Einsteckelement eingesetzt werden. Das Einsteckelement dient dabei bevorzugt als Befestigungselement. Das Einsteckelement kann stoffschlüssig und/oder kraftschlüssig mit der Führungseinrichtung verbunden sein. Bevorzugt weist das von der Führungseinrichtung abragende Einsteckelement eine zu dem Einsteckschacht korrespondierende Form auf, so dass das Einsteckelement in den Einsteckschacht formschlüssig einsetzbar ist. So kann als Einsteckelement beispielsweise eine Sechskantschraube verwendet werden, deren Kopf verdrehsicher in den Einsteckschacht eingesetzt werden kann. Bei einer sehr engen Ausgestaltung des Einsteckschachtes kann zur Befestigung der Führungseinrichtung beispielsweise eine selbstschneidende Schraube in der Führungseinrichtung eingeschraubt werden. Ferner kann der Einsteckschacht auch mit Hinterschnitten versehen sein. Dadurch kann die Führungseinrichtung mittels einer Clipsverbindung an dem Einsteckschacht befestigt werden. Durch die Hinterschnitte kann sich wenigstens ein Clipelement in dem Einsteckschacht verhaken. Die Wangen des Einsteckschachtes können von der Tragstruktur abragen, vorZugsweise materialeinheitlich mit dieser verbunden sein. Ferner kann der Einsteckschacht in die Tragstruktur eingebracht sein.

In einer vorteilhaften Ausgestaltung kann die Befestigungseinrichtung als wenigstens eine in die Tragstruktur eingebrachte Öffnung ausgebildet sein. Durch die Öffnung kann ein Befestigungselement, wie beispielsweise ein Clips, ein KabelBinder oder eine Rohrschelle, hindurchgeführt werden, an der Führungseinrichtung seitlich an der Tragstruktur, insbesondere dem zweiten Träger, zu befestigen. Vorteilhaft können mehrere Öffnungen in die Tragstruktur eingebracht sein. Die Öffnungen können durch eine nachträgliche spanende Bearbeitung der Tragstruktur eingebracht sein.

Weiterhin vorteilhaft ist die Führungseinrichtung als ein mit der Tragstruktur stoffschlüssig, vorzugsweise materialeinheitlich, verbundenes Einschubfach ausgebildet. In das Einschubfach kann wenigstens ein Kabel und/oder eine Leitung, mehrere Kabel und/oder Leitungen und/oder ein aus mehreren Kabel und/oder Leitungen gebildetes Kabelpaket und/oder Leitungspaket eingelegt werden. In einer vorteilhaften Ausgestaltung sind das Kabel und/oder die Leitung, die Kabel und/oder die Leitungen und/oder das Kabelpakt und/oder das Leitungspaket vorher mit einer Kabelführung aus Blech oder Kunststoff ummantelt und/oder vorkonfektioniert worden, um ein Durchreiben beispielsweise an den scharfen Sägekanten des Trägers und/oder des Einschubfaches zu vermeiden. Das oder die mit einer Kabelführung vorkonfektionierten Kabel werden dann in das Einschubfach eingelegt. In einer vorteilhaften Ausgestaltung ist das Einschubfach seitlich mit der Tragstruktur, insbesondere mit dem zweiten Träger, stoffschlüssig verbunden. Weiterhin vorteilhaft ist das Einschubfach derart mit der Tragstruktur verbunden, dass das Einschubfach auf dem Fahrzeugträger aufliegt.

Das Einschubfach kann im Bereich einer Einschuböffnung einen Hinterschnitt aufweisen. Der Hinterschnitt verhindert ein Hinausrutschen das oder der eingelegten Kabel und/oder die eingelegten Leitung oder die eingelegten Leitungen beziehungsweise der mit einer Führung vorkonfektionierten Kabel und/oder Leitung aus dem Einschubfach. Vorteilhaft ist der Hinterschnitt als ein von einer Wandung des Einschubfaches in die Einschuböffnung hineinragender Vorsprung ausgebildet.

In einer vorteilhaften Ausgestaltung ist die Tragstruktur mittels Strangpressen, Extrudieren oder Spritzgießen gebildet. Bevorzugt ist die Tragstruktur als Aluminiumstrangpressprofil ausgebildet. Eine als Aluminiumstrangpressprofil ausgebildete Tragstruktur mit einer möglichen anschließenden spanenden Nachbearbeitung ist kostengünstig in der Herstellung.

Weiterhin vorteilhaft ist die Tragstruktur aus einem Metall, insbesondere einem Leichtmetall, oder einem faserverstärktem Kunststoff gebildet. Vorteilhaft ist die Tragstruktur aus Aluminium hergestellt. Durch die Verwendung eines Leichtmetalls oder eines faserverstärktem Kunststoffes weist die Anschlagvorrichtung ein geringes Gewicht auf, so dass die Nutzlast des Kraftfahrzeugs erhöht und der CO2-Ausstoß verringert wird. Insbesondere weist eine Tragstruktur aus Aluminium im Vergleich zu einer Stahlkonstruktion ein um die Hälfte reduziertes Gewicht bei einer gleichbleibenden Funktion auf.

In einer vorteilhaften Ausgestaltung ist der Anschlag als ein auf der Tragplatte angeordneter Puffer aus einem elastomeren Material ausgebildet. Ein aus einem elastomeren Material gebildeter Puffer weist gute Dämpfungseigenschaften auf. Der Anschlag kann mit der Tragplatte stoffschlüssig und/oder kraftschlüssig verbunden sein.

Die Tragstruktur kann mit dem Fahrzeugträger verbunden sein. Vorteilhaft ist die Tragstruktur mit dem Fahrzeugträger verschraubt. Hierzu kann die Tragstruktur, insbesondere der erste Träger, mit Öffnungen versehen sein, durch die Schrauben hindurchgeführt und in am Fahrzeugträger ausgebildete Öffnungen eingeschraubt werden. Ferner kann die Tragstruktur auch in einer anderen Art und Weise mit dem Fahrzeugträger verbunden sein. So kann die Tragstruktur beispielsweise mit dem Fahrzeugträger vernietet und/oder verschweißt sein.

Nachfolgend werden die Anschlagvorrichtung sowie weitere Merkmale und Vorteile anhand von Ausführungsbeispielen näher erläutert, die in den Figuren schematisch dargestellt sind. Hierbei zeigen:
- Fig. 1: einen Querschnitt durch eine bekannte Anschlagvorrichtung;
- Fig. 2: einen Querschnitt durch eine Anschlagvorrichtung gemäß einer ersten Ausführungsform;
- Fig. 3: eine vergrößerte Darstellung der in Fig. 3 gezeigten Befestigungseinrichtung mit einem als Sechskantschraube ausgebildeten Einsteckelement;
- Fig. 4: eine vergrößerte Darstellung einer weiteren Ausführungsform einer Befestigungseinrichtung mit einem als Schraube ausgebildeten Einsteckelement;
- Fig. 5: einen Querschnitt durch eine Anschlagvorrichtung gemäß einer zweiten Ausführungsform; und
- Fig. 6: einen Querschnitt durch eine Anschlagvorrichtung gemäß einer dritten Ausführungsform.

In Fig. 1 ist eine Anschlagvorrichtung 10 gemäß einer ersten Ausführungsform dargestellt, die zur Begrenzung einer vertikalen Auslenkung einer an einem Achskörper befestigten Blattfeder dient.

Die Anschlagvorrichtung 10 weist einen Anschlag 12, eine Tragstruktur 14 zur AbStützung und Befestigung des Anschlags 12 an einem Fahrzeugträger 16 und eine Führungseinrichtung 18 zur Aufnahme und Führung eines vorkonfektionierten Kabelpakets und/oder eines vorkonfektionierten Leitungspakets 20 auf.

Die Tragstruktur 14 ist als Strangpressprofil aus einem Leichtmetall, insbesondere Aluminium, gefertigt. Die Tragstruktur 14 weist eine Tragplatte 22, einen ersten Träger 24, einen zweiten Träger 26 und einen die beiden Träger 24, 26 miteinander verbindenden Querträger 28 auf.

Der erste Träger 24 weist einen ersten Abschnitt 30 und einen näherungsweise konisch verlaufenden zweiten Abschnitt 32 auf. Der erste Abschnitt 30 dient zur Befestigung der Anschlagvorrichtung 10 an dem Fahrzeugträger 16. Hierzu weist der erste Abschnitt 32 Befestigungsöffnungen 34 auf, in welche nicht dargestellte Befestigungselemente, insbesondere Schrauben, in dazu am Fahrzeugträger 16 korrespondierende Öffnungen eingebracht werden können. Der zweite Träger 26 stützt sich auf einer Oberseite 36 des Fahrzeugträgers 16 ab. Der die beiden Träger 24, 26 miteinander verbindende Querträger 28 liegt auf einer Oberseite 36 des Fahrzeugträgers 16 auf. Der erste Abschnitt 30 des ersten Trägers 24 und der zweite Träger 26 verlaufen näherungsweise konisch zueinander und sind mit der Tragplatte 22 verbunden.

Auf der Tragplatte 22 ist der Anschlag 12 angeordnet. Der Anschlag 12 ist als ein Puffer 38 aus einem elastomeren Material ausgebildet. Der Puffer 38 ist vorliegend stoffschlüssig mit der Tragplatte 22 verbunden. Der Puffer 38 kann auch beispielsweise über eine Schraubverbindung mit der Tragplatte 22 verbunden sein.

Da sich der zweite Träger 26 auf der Oberseite 36 des Fahrzeugträgers 16 abstützt, wird das auf den ersten Träger wirkende Biegemoment bei einem Anschlag einer Blattfeder abgefangen, so dass die Tragplatte 22, welche als Substrat für den Puffer 38 dient, momentenfrei abgestützt ist.

Um den hierzu erforderlichen Bauraum für den zweiten Träger 26 und den Querträger 28 zu schaffen, ist der zweite Träger 26 mit einer Befestigungseinrichtung 40 versehen, die vorliegend seitlich an dem zweiten Träger 26 angeordnet ist. Die Befestigungseinrichtung 40 ist gemäß Fig. 2 als ein Einsteckschacht 42 ausgebildet, der aus zwei Wangen 44a, 44b gebildet ist. Die Wangen 44a, 44b bilden eine Nut, in die ein Einsteckelement 46 eingesetzt werden kann, wobei die Wangen 44a, 44b im Querschnitt ein näherungsweises L-förmiges Profil aufweisen.

Wie in Fig. 2 ersichtlich ist, weist die Führungseinrichtung18 ein Halteblech 48 auf, in das das Kabelpaket und/oder das Leitungspaket 20 eingesetzt ist. Das Halteblech 48 ist mit dem Einsteckelement 46 verbunden, das als Befestigungselement dient. Das Einsteckelement 46 kann kraftschlüssig und/oder stoffschlüssig mit dem Halteblech 48 verbunden sein. Zur Befestigung des Halteblechs 48 an dem zweiten Träger 26, wird das Einsteckelement 46 in den Einsteckschacht 42 eingesetzt, insbesondere eingeschoben.

In einer in Fig. 3 gezeigten Ausführungsform ist das Einsteckelement 46 als eine Sechskantschraube 50 ausgebildet, deren Kopf 52 in den Einsteckschacht 42 eingesetzt ist und deren Gewinde 54 mit dem Halteblech 46 verbindbar ist. Zur Befestigung des Halteblechs 48 an dem Träger 26 können eine oder mehrere Sechskantschrauben 50 oder vergleichbare Formen, die eine Verdrehsicherung ermöglichen, verwendet werden.

In der in Fig. 4 gezeigten weiteren Ausführungsform der Befestigungseinrichtung 40 sind die Wangen 44a, 44b als zwei nah beieinander angeordnete dicke Rippen ausgebildet, die eine Nut ausbilden, in deren engen Spalt eine selbstschneidende Schraube 56 zur Befestigung des Halteblechs 48 einschraubbar ist.

Ferner ist es auch denkbar, die Führungseinrichtung 16 mittels einer Clipsverbindung an dem Einsteckschacht 42 zu befestigen, in dem sich nicht dargestellte Clipse in einen durch die Wangen 44a, 44b gebildeten Hinterschnitt verhaken. Zudem ist es auch denkbar Löcher in die Tragstruktur 14 einzubringen, durch welche Kabelbinder, Clipse oder Rohrschellen hindurchgeführt werden können, an der Führungseinrichtung 18 an der Tragstruktur 14 zu befestigen.

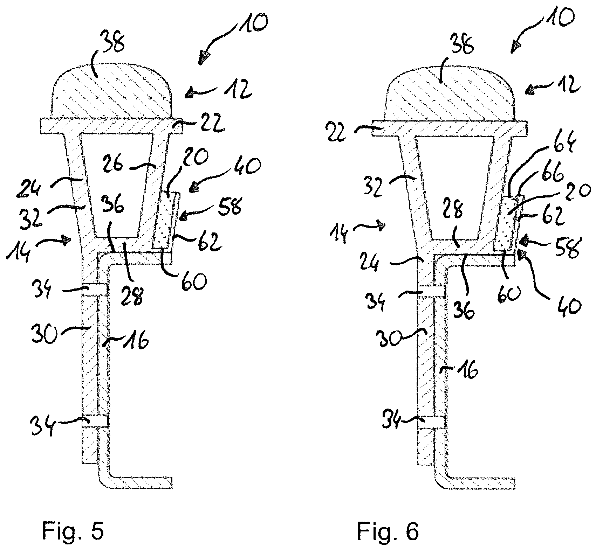

In Fig. 5 ist eine zweite Ausführungsform einer Anschlagvorrichtung 10 gezeigt, die sich von der ersten Ausführungsform dadurch unterscheidet, dass die Führungseinrichtung 16 als ein seitlich an dem zweiten Träger 26 angeordnetes Einschubfach 58 ausgebildet ist, das stoffschlüssig und materialeinheitlich mit dem zweiten Träger 26 verbunden ist. Das Einschubfach 58 weist einen Boden 60 auf, und eine Seitenwand 62 auf, die in etwa parallel zu dem zweiten Träger 26 verläuft. In das Einschubfach 56 ist ein vorkonfektioniertes Kabelpaket und/oder ein vorkonfektioniertes Leitungspaket 20 eingesetzt. Das Kabelpaket und/oder Leitungspaket 20 kann dazu mit einer Führung aus Blech oder Kunststoff ummantelt sein, um ein Durchreiben beispielsweise von scharfen Sägekanten der Tragstruktur 14 zu vermeiden.

In Fig. 6 ist eine dritte Ausführungsform einer Anschlagvorrichtung 10 offenbart, die sich insbesondere von der zweiten Ausführungsform dadurch unterscheidet, dass das Einschubfach 58 im Bereich einer Einschuböffnung 64 einen von der Seitenwand 62 abragenden Vorsprung 64 aufweist. Der Vorsprung 64 dient dabei als Hinterschnitt, um ein Hinausrutschen des Kabelpakets und oder eines Leitungspakets 20 in Richtung der Einschuböffnung 64 zu verhindern.

Durch die Verlegung der Befestigung der Führungseinrichtung 18 an die Tragstruktur 12 wird zusätzlicher Bauraum auf dem Fahrzeugträger 16 geschaffen. Dieser zusätzliche Bauraum kann dazu genutzt werden, um einen zweiten Träger 26 in die Tragstruktur 14 zu integrieren, der sich auf der Oberseite 36 des Fahrzeugträgers 16 abstützt. Der zweite Träger 26 fängt ein auf den ersten Träger 24 wirkendes Biegemoment ab und stützt dadurch die Tragplatte 22 momentenfrei ab. Dadurch ist es möglich, die Tragstruktur 14 als ein leichtgewichtiges, kostengünstiges Strangpressprofil aus Aluminium auszubilden, so dass die Nutzlast eines Kraftfahrzeugs erhöht und der CO2-Ausstoß verringert wird.

### Bezugszeichenliste

- 1: Anschlagvorrichtung
- 2: Stahlträger
- 3: Substratplatte
- 4: Gummipuffer
- 5: Rippe
- 6: Fahrzeuglängsträger
- 7: Kabelleitungen
- 8: Halteblech
- 10: Anschlagvorrichtung
- 12: Anschlag
- 14: Tragstruktur
- 16: Fahrzeugträger
- 18: Führungseinrichtung
- 20: Kabelpaket und/oder Leitungspaket
- 22: Tragplatte
- 24: erster Träger
- 26: zweiter Träger
- 28: Querträger
- 30: erster Abschnitt
- 32: zweiter Abschnitt
- 34: Befestigungsöffnung
- 36: Oberseite
- 38: Puffer
- 40: Befestigungseinrichtung
- 42: Einsteckschacht
- 44a: Wange
- 44b: Wange
- 46: Einsteckelement
- 48: Halteblech
- 50: Sechskantschraube
- 52: Kopf
- 54: Gewinde
- 56: selbstschneidende Schraube
- 58: Einschubfach
- 60: Boden
- 62: Seitenwand
- 64: Einschuböffnung
- 66: Vorsprung

## Patentansprüche

1. Anschlagvorrichtung (10) zur Begrenzung einer vertikalen Einfederung einer an einem Achskörper befestigten Blattfeder eines Kraftfahrzeugs mit einem Anschlag (12), der die vertikale Bewegung der Blattfeder begrenzt, einer Tragstruktur (14) zur Abstützung und Befestigung des Anschlags (12) an einem Fahrzeugträger (16) und einer Führungseinrichtung (18) zur Aufnahme und Führung wenigstens eines Kabels, einer Leitung (20) und/oder einer Halterung (48), wobei die Führungseinrichtung (18) an der Tragstruktur (14) befestigt ist, und **dadurch gekennzeichnet, dass** die Tragstruktur (14) eine Tragplatte (22), auf der der Anschlag (12) angeordnet ist, einen ersten Träger (24), einen zweiten Träger (26), die die Tragplatte (22) abstützen, und einen die beiden Träger (24, 26) miteinander verbindenden Querträger (28) aufweist.

2. Anschlagvorrichtung nach Anspruch 1, **dadurch gekennzeichnet, dass** die Tragstruktur (14) derart ausgebildet ist, dass sich ein Abschnitt der Tragstruktur (14) auf dem Fahrzeugträger (16) abstützt.

3. Anschlagvorrichtung nach Anspruch 1 oder 2, **dadurch gekennzeichnet, dass** die beiden Träger (24, 26) in einem Abschnitt konisch zueinander verlaufen.

4. Anschlagvorrichtung nach einem der vorhergehenden Ansprüche, **dadurch gekennzeichnet, dass** die Tragstruktur (14) eine Befestigungseinrichtung (40) zur Befestigung der Führungseinrichtung (18) aufweist.

5. Anschlagvorrichtung nach Anspruch 4, **dadurch gekennzeichnet, dass** die Befestigungseinrichtung (40) als ein Einsteckschacht (42) ausgebildet ist, in den ein mit der Führungseinrichtung (18) verbundenes oder verbindbares Einsteckelement (46) einsetzbar ist.

6. Anschlagvorrichtung nach Anspruch 4 oder 5, **dadurch gekennzeichnet, dass** die Befestigungseinrichtung (40) als wenigstens eine in die Tragstruktur (14) eingebrachte Öffnung ausgebildet ist.

7. Anschlagvorrichtung nach einem der vorhergehenden Ansprüche, **dadurch gekennzeichnet, dass** die Führungseinrichtung (16) als ein mit der Tragstruktur (14) verbundenes Einschubfach (58) ausgebildet ist.

8. Anschlagvorrichtung nach Anspruch 7, **dadurch gekennzeichnet, dass** das Einschubfach (58) im Bereich einer Einschuböffnung (64) einen Hinterschnitt (66) aufweist.

9. Anschlagvorrichtung nach einem der vorhergehenden Ansprüche, **dadurch gekennzeichnet, dass** die Tragstruktur (14) mittels Strangpressen, Extrudieren oder Spritzgießen gebildet ist.

10. Anschlagvorrichtung nach einem der vorhergehenden Ansprüche, **dadurch gekennzeichnet, dass** die Tragstruktur (14) aus einem Metall oder einem faserverstärktem Kunststoff gebildet ist.

11. Anschlagvorrichtung nach einem der vorhergehenden Ansprüche, dass der Anschlag (12) als ein auf der Tragplatte (22) angeordneter Puffer (38) aus einem elastomeren Material ausgebildet ist.

12. Anschlagvorrichtung nach einem der vorhergehenden Ansprüche, **dadurch gekennzeichnet, dass** die Tragstruktur (14) mit dem Fahrzeugträger (16) verbunden ist.

## Claims

1. Stop device (10) for limiting a vertical deflection of a leaf spring of a motor vehicle which is fastened to an axle body, having a stop (12) which limits the vertical movement of the leaf spring, a supporting structure (14) for supporting and fastening the stop (12) to a vehicle carrier (16), and a guide device (18) for receiving and guiding at least a cable, a line (20) and/or a holder (48), wherein the guide device (18) is fastened to the supporting structure (14), and **characterised in that** the supporting structure (14) has a supporting plate (22) on which the stop (12) is arranged, a first carrier (24), a second carrier (26), which support the supporting plate (22), and a transverse carrier (28) connecting the two carriers (24, 26) to one another.

2. Stop device according to claim 1, **characterised in that** the supporting structure (14) is designed such that a portion of the supporting structure (14) is supported on the vehicle carrier (16).

3. Stop device according to claim 1 or 2, **characterised in that** the two carriers (24, 26) extend conically with respect to one another in one portion.

4. Stop device according to any one of the preceding claims, **characterised in that** the supporting structure (14) has a fastening device (40) for fastening the guide device (18).

5. Stop device according to claim 4, **characterised in that** the fastening device (40) is designed as an insertion shaft (42) into which an insertion element (46) connected or connectable to the guide device (18) can be inserted.

6. Stop device according to claim 4 or 5, **characterised in that** the fastening device (40) is designed as at least one opening provided in the supporting structure (14).

7. Stop device according to any one of the preceding claims, **characterised in that** the guide device (16) is designed as a slide-in compartment (58) connected to the supporting structure (14).

8. Stop device according to claim 7, **characterised in that** the slide-in compartment (58) has an undercut (66) in the region of a slide-in opening (64).

9. Stop device according to any one of the preceding claims, **characterised in that** the supporting structure (14) is formed by extrusion moulding, extruding or injection moulding.

10. Stop device according to any one of the preceding claims, **characterised in that** the supporting structure (14) is formed from a metal or a fibre-reinforced plastic.

11. Stop device according to any one of the preceding claims **characterised in that** the stop (12) is formed as a buffer (38) made of an elastomeric material arranged on the supporting plate (22).

12. Stop device according to any one of the preceding claims, **characterised in that** the supporting structure (14) is connected to the vehicle carrier (16).

## Revendications

1. Dispositif de butée (10) pour la limitation d'un débattement vertical d'un ressort à lame, fixé sur un corps d'essieu, d'un véhicule automobile, comprenant une butée (12), qui limite le mouvement vertical du ressort à lame, une structure porteuse (14) pour le soutien et la fixation de la butée (12) sur un support de véhicule (16) et un dispositif de guidage (18) pour la réception et de guidage d'au moins un câble, d'une ligne (20) et/ou d'une monture (48), dans lequel le dispositif de guidage (18) est fixé sur la structure porteuse et **caractérisé en ce que** la structure porteuse (14) comprend une plaque porteuse (22), sur laquelle est agencée la butée (12), un premier support (24), un second support (26), qui soutiennent la plaque porteuse (22), et un support transversal (28) qui relie les deux supports (24, 26) l'un à l'autre.

2. Dispositif de butée selon la revendication 1, **caractérisé en ce que** la structure porteuse (14) est réalisée de telle manière qu'une portion de la structure porteuse (14) est soutenue sur le support de véhicule (16).

3. Dispositif de butée selon la revendication 1 ou 2, **caractérisé en ce que** les deux supports (24, 26) convergent l'un vers l'autre de manière conique dans une portion.

4. Dispositif de butée selon l'une des revendications précédentes, **caractérisé en ce que** la structure porteuse (14) comprend un moyen de fixation (40) pour la fixation du dispositif de guidage (18).

5. Dispositif de butée selon la revendication 4, **caractérisé en ce que** le moyen de fixation (40) est réalisé sous la forme d'une emboîture d'enfichage (42) dans laquelle un élément enfichable (46) relié ou susceptible d'être relié au dispositif de guidage (18) peut être mis en place.

6. Dispositif de butée selon la revendication 4 ou 5, **caractérisé en ce que** le moyen de fixation (40) est réalisé sous la forme d'au moins une ouverture ménagée dans la structure porteuse (14).

7. Dispositif de butée selon l'une des revendications précédentes, **caractérisé en ce que** le dispositif de guidage (16) est réalisé sous la forme d'un tiroir à emboîter (58) relié à la structure porteuse (14).

8. Dispositif de butée selon la revendication 7, **caractérisé en ce que** le tiroir à emboîter (58) comprend, dans la zone d'une ouverture d'emboîtement (64), une contre dépouille (66).

9. Dispositif de butée selon l'une des revendications précédentes, **caractérisé en ce que** la structure porteuse (14) est réalisée par pressage en bande, par extrusion ou par moulage par injection.

10. Dispositif de butée selon l'une des revendications précédentes, **caractérisé en ce que** la structure porteuse (14) est réalisée en métal ou en matière plastique renforcée par des fibres.

11. Dispositif de butée selon l'une des revendications précédentes, **caractérisé en ce que** la butée (12) est réalisée sous la forme d'un tampon (38) en matériau élastomère, agencé sur la plaque porteuse (22).

12. Dispositif de butée selon l'une des revendications précédentes, **caractérisé en ce que** la structure porteuse (14) est reliée au support de véhicule (16).
